(19) Europäisches Patentamt / European Patent Office / Office européen des brevets

(11) **EP 3 579 475 B1**

(12) **EUROPEAN PATENT SPECIFICATION**

(45) Date of publication and mention of the grant of the patent:
**19.06.2024 Bulletin 2024/25**

(21) Application number: **17894743.8**

(22) Date of filing: **23.03.2017**

(51) International Patent Classification (IPC):
*H04L 5/00* $^{(2006.01)}$    *H04W 72/04* $^{(2023.01)}$
*H04B 1/713* $^{(2011.01)}$

(52) Cooperative Patent Classification (CPC):
**H04L 5/0048; H04B 1/713; H04L 5/0058; H04W 72/04**

(86) International application number:
**PCT/CN2017/077934**

(87) International publication number:
**WO 2018/141125 (09.08.2018 Gazette 2018/32)**

(54) **INFORMATION TRANSMISSION METHOD AND DEVICE**

INFORMATIONSÜBERTRAGUNGSVERFAHREN UND -VORRICHTUNG

PROCÉDÉ ET DISPOSITIF DE TRANSMISSION D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.02.2017 CN 201710064583**

(43) Date of publication of application:
**11.12.2019 Bulletin 2019/50**

(73) Proprietor: **ZTE Corporation**
**Shenzhen, Guangdong 518057 (CN)**

(72) Inventors:
• **HAN, Xianghui**
**Shenzhen**
**Guangdong 518057 (CN)**
• **XIA, Shuqiang**
**Shenzhen**
**Guangdong 518057 (CN)**
• **LIANG, Chunli**
**Shenzhen**
**Guangdong 518057 (CN)**
• **ZHANG, Wen**
**Shenzhen**
**Guangdong 518057 (CN)**
• **SHI, Jing**
**Shenzhen**
**Guangdong 518057 (CN)**

• **REN, Min**
**Shenzhen**
**Guangdong 518057 (CN)**

(74) Representative: **Iannone, Carlo Luigi et al**
**Barzanò & Zanardo Milano S.p.A.**
**Via Borgonuovo, 10**
**20121 Milano (IT)**

(56) References cited:
WO-A1-2013/104119    WO-A1-2016/143967
CN-A- 101 005 341    CN-A- 105 897 390
US-A1- 2016 360 529

• SPREADTRUM COMMUNICATIONS: "Discussion on DL RS design for sTTI", 3GPP DRAFT; R1-1608915_DISCUSSION ON DL RS FOR STTI_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051148969, Retrieved from the Internet: URL:http://www.3gpp.org/ftp/Meetings_3GPP_SYNC/RAN1/Docs/ [retrieved on 2016-10-09]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- Xia Shuqiang et al.: "Uplink Control Channel Design for 5G Ultra-Low Latency Communi tion", 2016 IEEE 27th IEEE Annual International Symposium on Personal, Indoor, and Mobile Radio Communications (PIMRC, 8 September 2016 (2016-09-08), XP033035319,
- INTEL CORPORATION: "Downlink DM-RS design for NR", 3GPP DRAFT; R1-1700352 DOWNLINK DM-RS DESIGN FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051207889, Retrieved from the Internet: URL:http://www.3gpp.org/ftp/Meetings_3GPP_SYNC/RAN1/Docs/ [retrieved on 2017-01-16]
- INTEL CORPORATION: "Demodulation reference signals design aspects for URLLC mini-slots", 3GPP DRAFT; R1-1700381 INTEL - URLLC_REFSIG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051207918, Retrieved from the Internet: URL:http://www.3gpp.org/ftp/Meetings_3GPP_SYNC/RAN1/Docs/ [retrieved on 2017-01-16]

**Description**

**TECHNICAL FIELD**

The present invention relates to the field of telecommunications and, in particular, to an information method and device.

**BACKGROUND**

In the 3rd generation partnership project (3GPP) long term evolution (LTE) and LTE-Advanced (LTE-A) systems, the transmission time interval (TTI) is the basic unit of downlink and uplink transmission scheduling in the time domain. For example, in the LTE/LTE-A frequency division duplex (FDD) system, time dimension is divided into radio frames with a length of 10 ms, each radio frame includes 10 subframes, and a TTI length is equal to a subframe length. The TTI length is 1ms. Each subframe includes two slots, and the length of each slot is 0.5ms. Each downlink slot includes 7 orthogonal frequency division multiplexing (OFDM) symbols (6 OFDM symbols under an extended cyclic prefix); each uplink slot includes 7 single carrier-frequency division multiplexing access (SC-FDMA) symbols (6 SC-FDMA symbols under the extended cyclic prefix).

Subsequent enhancements of the LTE/LTE-A system or 5G will support a higher rate (Gbps), massive links (1M/Km2), a ultra-low delay (1 ms), higher reliability, and hundredfold energy efficiency improvement to support the new requirement changes. Among them, the ultra-low delay, as a key index of the 5G technology, directly affects the development of delay-limited services such as the Internet of Vehicles, industrial automation, remote control and a smart grid. However, the existing TTI with the length of 1ms is no longer able to meet the requirements. An effective solution is to reduce the TTI length, such as reducing the current TTI with the length of 1ms to 0.5 ms or even one or two a length of OFDM symbols, which can reduce the minimum scheduling time by multiple times, thereby reducing the single transmission latency by multiples times.

When the TTI length is reduced, the physical uplink control channel (PUCCH) will cause performance degradation due to the energy decrease of the accumulated symbol, thereby further affecting the cell coverage.

No effective solution has been provided to solve the problem in the existing art where the system performance is degraded and the cell coverage is affected.

SPREADTRUM COMMUNICATIONS: "Discussion on DL RS design for sTTI", 3GPP DRAFT (R1-1608915) discusses the DL DMRS design for sTTI, especially DMRS design for 2-symbol TTI and slot-based sTTI.

**SUMMARY**

Subsequent enhancements of the LTE/LTE-A system or 5G will support a higher rate (Gbps), massive links (1M/Km2), a ultra-low delay (1 ms), higher reliability, and hundredfold energy efficiency improvement to support the new requirement changes. However, the existing TTI with the length of 1ms is no longer able to meet the requirements. And when the TTI length is reduced, the physical uplink control channel (PUCCH) will cause performance degradation due to the energy decrease of the accumulated symbol, thereby further affecting the cell coverage. Embodiments of the present invention provide an information method and device to solve at least the problem in the existing art where the system performance is degraded and the cell coverage is affected. The present disclosure provides an information transmission method according to independent claim 1, and an information transmission device according to claim 11. Further improvements and embodiments are provided in the dependent claims.

**BRIEF DESCRIPTION OF DRAWINGS**

The drawings described herein are used to provide a further understanding of the present invention, and form a part of the present application. In the drawings:

FIG. 1 is a block diagram of hardware of an information transmission method according to an embodiment of the present invention;

FIG. 2 is a flowchart of an information transmission method according to an embodiment of the present invention;

FIG. 3 is a schematic diagram of a frequency hopping according to a specific embodiment two of the present invention;

FIG. 4 is a schematic diagram of a frequency hopping according to a specific embodiment two of the present invention;

FIG. 5 is a schematic diagram of a frequency hopping according to a specific embodiment three of the present invention;

FIG. 6 is a schematic diagram of a frequency hopping according to a specific embodiment four of the present invention;

FIG. 7 is a schematic diagram of a frequency hopping according to a specific embodiment five of the present invention;

FIG. 8 is a schematic diagram of a frequency hopping according to a specific embodiment six of the present invention;

FIG. 9 is a schematic diagram of a frequency hopping according to a specific embodiment seven of the present invention;

FIG. 10 is a schematic diagram of a frequency hopping according to a specific embodiment eight of the present invention;

FIG. 11 is a schematic diagram of a frequency hopping according to a specific embodiment nine of the present invention; and

FIG. 12 is a block diagram of an information transmission device according to an embodiment of the present invention.

## DETAILED DESCRIPTION

Hereinafter the present invention will be described in detail with reference to the drawings and in conjunction with embodiments. It is to be noted that if not in collision, the embodiments and features therein in the present application may be combined with each other.

It is to be noted that the terms "first", "second" and the like in the description, claims and above drawings of the present invention are used to distinguish between similar objects and are not necessarily used to describe a particular order or sequence.

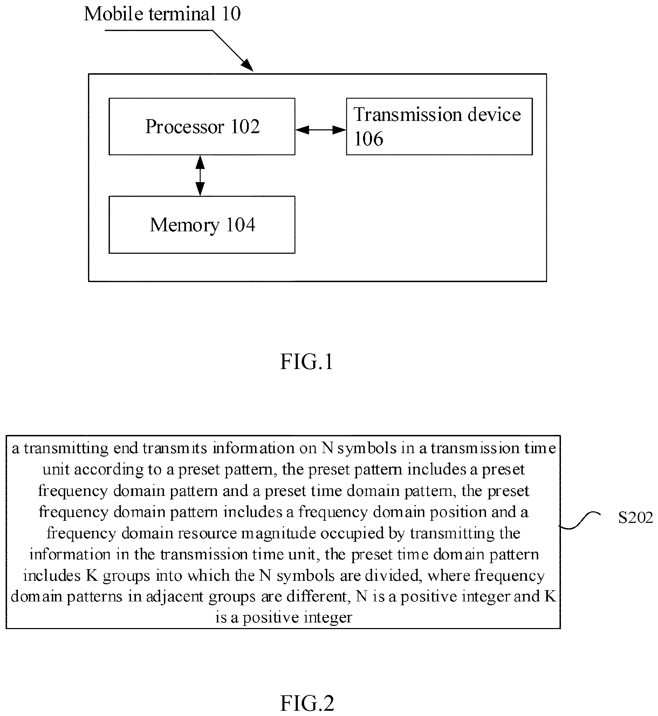

Embodiments provided by the present application directed to a method may be executed in a mobile terminal, a computer terminal or other similar computing devices. Taking the method to be executed in the mobile terminal as an example, FIG. 1 is a block diagram of hardware of an information transmission method according to an embodiment of the present invention. As shown in FIG. 1, a mobile terminal 10 may include one or more (only one is shown in FIG. 1) processors 102 (the processor 102 may include, but is not limited to, a processing device such as a microcontroller unit (MCU) and a field programmable gate array (FPGA)), a memory 104 used for storing data, and a transmission device 106 used for implementing a communication function. It should be understood by those skilled in the art that the structure shown in FIG. 1 is merely illustrative and not intended to limit the structure of the electronic apparatus described above. For example, the mobile terminal 10 may further include more or fewer components than the components shown in FIG. 1 or may have a configuration different from that shown in FIG. 1. The memory 104 may be used for storing software programs and modules of application software, such as program instructions/modules corresponding to the information transmission method in the embodiments of the present invention. The processor 102 executes the software programs and modules stored in the memory 104 so as to perform various function applications and data processing, that is, to implement the method described above. The memory 104 may include a high-speed random access memory, and may further include a nonvolatile memory, such as one or more magnetic storage devices, flash memories or other nonvolatile solid-state memories. In some examples, the memory 104 may further include memories that are remotely disposed with respect to the processor 102. These remote memories may be connected to the mobile terminal 10 via a network. Examples of the preceding network include, but are not limited to, the Internet, an intranet, a local area network, a mobile communication network and a combination thereof. The transmission device 106 is configured to receive or transmit data via a network. Specific examples of such a network may include a wireless network provided by a communication provider of the mobile terminal 10. In one example, the transmission device 106 includes a network interface controller (NIC), which may be connected to other network devices via a base station, thereby communicating with the Internet. In one example, the transmission device 106 may be a radio frequency (RF) module, which is configured to communicate with the Internet wirelessly.

An embodiment provides an information transmission method executable on the mobile terminal described above. FIG. 2 is a flowchart of the information transmission method according to the embodiment of the present invention. As shown in FIG. 2, the method includes the steps described below.

In step S202, a transmitting end transmits information on N symbols in a transmission time unit according to a preset pattern. The preset pattern includes a preset frequency domain pattern and a preset time domain pattern, the preset frequency domain pattern includes a frequency domain position and a frequency domain resource magnitude occupied by transmitting the information in the transmission time unit, the preset time domain pattern includes K groups into which the N symbols are divided, where frequency domain patterns in adjacent groups are different, N is a positive integer and K is a positive integer.

Through the above step, since the information is transmitted on the N symbols in the transmission time unit according to the preset pattern, the N symbols in the preset time domain pattern included in the preset pattern are divided into K groups, and the frequency domain patterns in the adjacent groups are different, thereby implementing a frequency hopping structure of the transmission time unit, improving the system performance through increasing the frequency hopping, and solving the problem in the exiting art where the system performance is degraded and the cell coverage is affected, and achieving the effect of improving the system performance and avoiding affecting the cell coverage.

Optionally, the above step may, but may not necessarily, be executed by a terminal.

For the above problem in the existing art, one solution is to introduce a symbol-level frequency hopping to bring frequency division gains. However, the current frequency hopping structure is based on a slot frequency hopping, and has no frequency hopping structure in the slot. Furthermore, since a slot length is a length of an odd number of symbols, how to reasonably configure a number of time domain symbols at each frequency hopping position is a problem to be solved. In addition, since multiple shortened TTI lengths need to be supported, and multiple lengths may be multiplexed on a same carrier, in this case, a reasonable frequency hopping pattern needs to be designed for more efficiently being compatible with the multiplexing between different TTI lengths. For the above problem, a frequency hopping structure based on a 7-symbol transmission time unit is proposed in the embodiment of the present invention. In an optional embodiment, the above transmission time unit may include 7 symbols, and when the transmission time unit includes 7 symbols, N=7 or 6.

In an optional embodiment, when N=6, the N symbols are first six symbols in the above transmission time unit. Optionally, N may be 5 or other numbers, and when N is less than a total number of symbols included in the transmission time unit, the N symbols are the first N symbols of the transmission time unit, and the remaining symbols may be used for transmitting other specific information.

In the above embodiment, the number of frequency domain positions M is less than or equal to K, and M is a positive integer.

In an optional embodiment, M=2, correspondingly, K≥2. Optionally, a value of M may also be 3 or other numbers, as long as M≤K is ensured.

In an optional embodiment, when M=2, the frequency domain positions are located on two sides of a system bandwidth; and when M=3, the frequency domain positions are located on two sides of the system bandwidth and in the middle of the system bandwidth. When M>3, the frequency domain positions may be evenly distributed in the system bandwidth. In another optional embodiment, the frequency domain resource magnitude corresponding to each frequency domain position is one PRB; and the frequency domain resource magnitudes corresponding to different frequency domain positions may be the same or different. In another optional embodiment, the frequency domain resource magnitude corresponding to each frequency domain position may be a multiple of 12 subcarriers.

In an optional embodiment, when the frequency domain resource magnitude corresponding to each frequency domain position is one PRB, an index of the one PRB may be determined by at least one of: a total number of PRBs included in the system bandwidth; a channel resource index allocated to the transmitting end; and a number of subcarriers included in the PRB.

In an optional embodiment, K=2 or K=3, in another optional embodiment, a number of symbols in each group is one, two, three or four. It is to be noted that the number of the groups and the number of symbols in each group may be flexibly configured according to the actual situation, and the values described above are merely preferred embodiments.

In an optional embodiment, when K=2, the method includes at least one of: for the frequency domain, in the preset frequency domain pattern, the frequency domain positions occupied by two groups are different; for the time domain, when the number of symbols of the transmission time unit is 7 and N=7, in the preset time domain pattern, symbols included in one group of the two groups are first four symbols, and symbols included in another group of the two groups are last three symbols, or the symbols included in one group of the two groups are first three symbols and the symbols included in another group of the two groups are last four symbols; when the number of symbols of the transmission time unit is 7 and N=6, symbols included in one group of the two groups are first three symbols of the six symbols (i.e., symbols with symbol indexes of 0, 1 and 2), symbols included in one group of the two groups are last three symbols of the six symbols (i.e., symbols with symbol indexes of 3, 4, and 5), or the symbols included in one group of the two groups are the symbols with the symbol indexes of 0, 1, 2 and 3, and the symbols included in another group of the two groups are the symbols having the symbol indexes of 4 and 5; when the number of symbols of the transmission time unit is 3 and N=3, the symbols included in one group of the two groups are the symbols with symbol indexes of 0 and 1, the symbol included in another group of the two groups is the symbol with the symbol index of 2, or the symbol included in one group of the two groups is the symbol with the symbol index of 0, and the symbols included in another group of the two groups are the symbols with the symbol indexes of 1 and 2; and when the number of symbols of the transmission time unit is 3 and N=2, the symbol included in one group of the two groups is the symbol with the symbol index of 0, the symbol included in another group of the two groups is the symbol with the symbol index of 1.

It is to be noted that the symbol index in the transmission time interval starts from 0, and the symbol with the index of 0 is the first symbol, and so on.

In an optional embodiment, when the number of the symbols of the transmission time unit is 7, the method includes one of: when the symbols included in a first group of the two groups are the first four symbols, and the symbols included in a second group of the two groups are the last three symbols, a reference symbol in the first group is located on a second symbol and a third symbol in the first group (i.e., the second symbol and the third symbol of the first four symbols to which the following description is similar), the reference symbol in the first group is located on the second symbol in the first group; a reference symbol in the second group is located on a second symbol in the second group, or the reference symbol in the second group is located on a first symbol in the second group; when the symbols included in the first group of the two groups are the first three symbols, and the symbols included in the second group of the two groups are the last four symbols, the reference symbol in the first group is located on the second symbol in the first group, or the reference symbol in the first group is located on a first symbol in the first group; the reference symbol in the second group is located on the second symbol and the third symbol in the second group, or the reference symbol in the second group is located on the second symbol and the fourth symbol in the second group; or the reference symbol in the second group is located on the second symbol in the second group, or the reference symbol in the second group is located on the first symbol and the third symbol in the second group; when the symbols included in one group of the two groups are the symbols with the symbol indexes of 0, 1 and 2, and the symbols included in another group of the two groups are the symbols with the symbol indexes of 3, 4, and 5, the reference symbol in the first group is located on the second symbol in the first group, or the reference symbol in the first group is located on the first symbol in the first group; or the reference symbol in the second group is located on the second symbol in the second group, or the reference symbol in the second group is located on the first symbol in the second group. In this embodiment, the reference symbol is used for transmitting a symbol of reference information, and the reference information is used for data demodulation. when the symbols included in one group of the two groups are the symbols with the symbol indexes of 0, 1, 2 and 3, and the symbols included in another group of the two groups are the symbols with the symbol indexes of 4 and 5, the reference symbol in the first group is located on the second symbol and the third symbol in the first group, or the reference symbol in the first group is located on the second symbol in the first group; the reference symbol in the second group is located on the second symbol in the second group, or the reference symbol in the second group is located on the first symbol in the second group.

In an optional embodiment, when the number of the symbols of the transmission time unit is 7, the method includes one of: when the symbols included in the first group of the two groups are the first four symbols, and the symbols included in the second group of the two groups are the last three symbols, the reference symbol in the first group is located on the first symbol and the second symbol in the first group, and the reference symbol in the second group is located on the first symbol in the second group, or the reference symbol in the first group is located on the third symbol and the fourth symbol in the first group and the reference symbol in the second group is located on the first symbol in the second group; when the symbols included in the first group of the two groups are the first three symbols, and the symbols included in the second group of the two groups are the last four symbols, the reference symbol in the first group is located on the first symbol in the first group, and the reference symbol in the second group is located on the first symbol and the second symbol in the second group, or the reference symbol in the first group is located on the third symbol in the first group and the reference symbol in the second group is located on the first symbol and the second symbol in the second group; when the symbols included in one group of the two groups are the symbols with the symbol indexes of 0, 1 and 2, and the symbols included in another group of the two groups are the symbols with the symbol indexes of 3, 4, and 5, the reference symbol in the first group is located on the first symbol in the first group, and the reference symbol in the second group is located on the first symbol in the second group; and when the symbols included in one group of the two groups are the symbols with the symbol indexes of 0, 1, 2 and 3, and the symbols included in another group of the two groups are the symbols with the symbol indexes of 4 and 5, the reference symbol in the first group is located on the third symbol and the fourth symbol in the first group, and the reference symbol in the second group is located on the first symbol in the second group.

In an optional embodiment, when the number of the symbols of the transmission time unit is 7 and K=2, the method includes one of: when a transmission time interval is located in a slot 0 in a subframe, the number of symbols included in a first group is three and the number of symbols included in a second group is four; and when the transmission time interval is located in a slot 1 in the subframe, the number of symbols included in the first group is four and the number of symbols included in the second group is three; or the number of symbols included in the first group is four and the number of symbols included in the second group is two.

In an optional embodiment, when the number of the symbols of the transmission time unit is 7 and K=2, and the sent information is uplink control information of X bits, the method includes one of: a reference symbol is located on a symbol with an index of 1 and a symbol with an index of 4 in a transmission time interval; the reference symbol is located on the symbol with the index of 1 and a symbol with an index of 5 in the transmission time interval; the reference symbol is located on the symbol with the index of 0 and a symbol with an index of 3 in the transmission time interval; when the transmission time interval is located in a slot 0 in a subframe, the reference symbol is located on the symbol with the index of 0 and the symbol with the index of 3 in the transmission time interval; when the transmission time interval is located in a slot 1 in the subframe, the reference symbol is located on the symbol with the index of 0 and the symbol with the index of 4 in the transmission time interval; where X is an integer greater than 2, and an index number in indexes of the transmission time interval starts from 0.

In an optional embodiment, a value of an index $n_{PRB}$ of a PRB corresponding to the frequency domain positions of the two groups includes:

$$n_{PRB} = \begin{cases} \left\lfloor \dfrac{m}{2} \right\rfloor, where, (m + n_{group} \bmod 2) \bmod 2 = 0 \\ N_{RB} - 1 - \left\lfloor \dfrac{m}{2} \right\rfloor, where, (m + n_{group} \bmod 2) \bmod 2 = 1 \end{cases},$$

m denotes an integer, $n_{group}$ denotes a group index, $N_{RB}$ denotes a total number of PRBs in a system bandwidth.

$$m = \left\lfloor \frac{n_{channel}}{N_{sc}} \right\rfloor$$

In an optional embodiment, $n_{channel}$ denotes a channel resource index allocated to the transmitting end; and $N_{sc}$ denotes a number of subcarriers included in one PRB.

$$m = \left\lfloor \frac{n_{channel}}{N_{SF}^{PUCCH,7}} \right\rfloor$$

In an optional embodiment, when the sent information is uplink control information of X bits, , where $n_{channel}$ denotes a channel resource index allocated to the transmitting end and $N_{SF}^{PUCCH,7}$ denotes a time domain OCC length, X is an integer greater than 2, optionally, $N_{SF}^{PUCCH,7} = 2$ .

In an optional embodiment, when a number of symbols of the transmission time unit is 7 and K=2, and the sent information is uplink control information of X bits and encoding adopts a RM encoding, a number of symbols output after modulation is Y, Y is a multiple of 12, the method includes one of: mapping modulation symbols with indexes of 0~Y/2-1 on symbols with indexes of 0 and 2 after discrete Fourier transform (DFT), mapping modulation symbols with indexes of Y/2~Y-1 on symbols with indexes of 3, 5 and 6 after the DFT, or in case of using a last symbol to send a sounding reference signal (SRS), mapping modulation symbols with indexes of Y/2~Y-1 on the symbols with the indexes of 3 and 5 after the DFT; mapping the modulation symbols with the indexes of 0~Y/2-1 on the symbols with indexes of 0 and 2 after the DFT, mapping the modulation symbols with the indexes of Y/2~Y-1 on the symbols with indexes of 3, 4 and 6 after the DFT, or in case of using the last symbol to send the SRS, mapping the modulation symbols with the indexes of Y/2~Y-1 on the symbols with the indexes of 3 and 4 after the DFT; mapping the modulation symbols with the indexes of 0~Y/2-1 on a data symbol of a first group after the DFT, mapping the modulation symbols with indexes of Y/2~Y1 on the data symbol of the first group after the DFT; where X is a positive integer greater than 2

In an optional embodiment, when a number of symbols of the transmission time unit is 7 and K=2, and the sent information is uplink control information of X bits and encoding adopts a TBCC encoding, a number of symbols output after modulation is Y, Y is a multiple of 6, the method includes one of: mapping modulation symbols on symbols with indexes of 0, 2, 3, 5 and 6 after DFT, when using a last symbol to send a SRS, mapping the modulation symbols on the symbols with the indexes of 0, 2, 3 and 5 after the DFT; and mapping the modulation symbols on the symbols with the indexes of 0, 2, 3, 4 and 6 after DFT, when using the last symbol to send the SRS, mapping the modulation symbols on the symbols with the indexes of 0, 2, 3 and 4 after the DFT.

In an optional embodiment, when K=3, the method includes at least one of: in the preset frequency domain pattern, a first group and a second group in three groups occupy different frequency domain positions, and the first group and a third group occupy a same frequency domain position; when N=7, in the preset time domain pattern, in the three groups, symbols included in the first group are two symbols with symbol indexes of 0 and 1, symbols included in the second group are two symbols with symbol indexes of 2 and 3 and symbols included in the third group are three symbols with symbol indexes of 4, 5 and 6; or in the three groups, the symbols included in the first group are three symbols with the symbol indexes of 0, 1 and 2, the symbols included in the second group are two symbols with the symbol indexes of 3 and 4, and the symbols included in the third group are two symbols with the symbol indexes of 5 and 6; and when N=6, in the preset time domain pattern, in the three groups, the symbols included in the first group are two symbols with the symbol indexes of 0 and 1, the symbols included in the second group are two symbols with the symbol indexes of 2 and 3, and the symbols included in the third group are two symbols with the symbol indexes of 4 and 5.

In an optional embodiment, the method includes one of: when in the three groups, the symbols included in the first group are two symbols with the symbol indexes of 0 and 1, and the symbols included in the second group are two symbols with the symbol indexes of 2 and 3, and the symbols included in the third group are three symbols with the symbol indexes of 4, 5 and 6, a reference symbol in each group is located on a first symbol in the each group; or the reference symbol in the first group is located on a first symbol in the first group, the reference symbol in the second group is located on a first symbol in the second group, and the reference symbol in the third group is located on a second symbol in the third group; when in the three groups, the symbols included in the first group are three symbols with the symbol indexes of 0, 1 and 2, and the symbols included in the second group are two symbols with the symbol indexes of 3 and 4, and the symbols included in the third group are two symbols with the symbol indexes of 5 and 6, the reference symbol in each group is located on the first symbol in the each group; or the reference symbol in the first group is located on a second symbol in the first group, the reference symbol in the second group is located on the first symbol in the second group, and the reference symbol in the third group is located on a first symbol in the third group; when in the three groups, the symbols included in the first group are two symbols with the symbol indexes of 0 and 1, and the symbols included in the second group are two symbols with the symbol indexes of 2 and 3, and the symbols included in the third group are two symbols with the symbol indexes of 4 and 5, the reference symbol in each group is located on the first symbol in the each group.

In an optional embodiment, a value of an index $n_{PRB}$ of a PRB corresponding to the frequency domain positions of the three groups includes:

$$n_{PRB} = \begin{cases} \left\lfloor \dfrac{m}{2} \right\rfloor, where, (m + n_{group} \bmod 3) \bmod 2 = 0 \\ N_{RB} - 1 - \left\lfloor \dfrac{m}{2} \right\rfloor, where, (m + n_{group} \bmod 3) \bmod 2 = 1 \end{cases},$$

m denotes an integer, $n_{group}$ denotes a group index, $N_{RB}$ denotes a total number of PRBs in a system bandwidth.

$$m = \left\lfloor \frac{n_{channel}}{N_{sc}} \right\rfloor$$

In an optional embodiment,                          , $n_{channel}$ denotes a channel resource index allocated to the transmitting end; and $N_{sc}$ denotes a number of subcarriers included in one PRB.

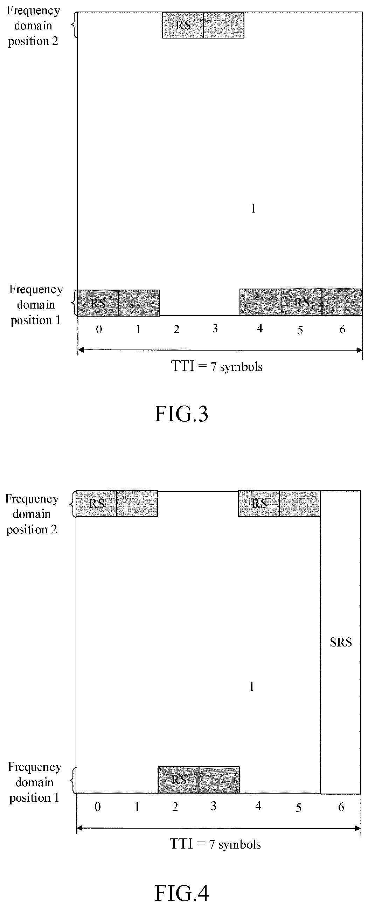

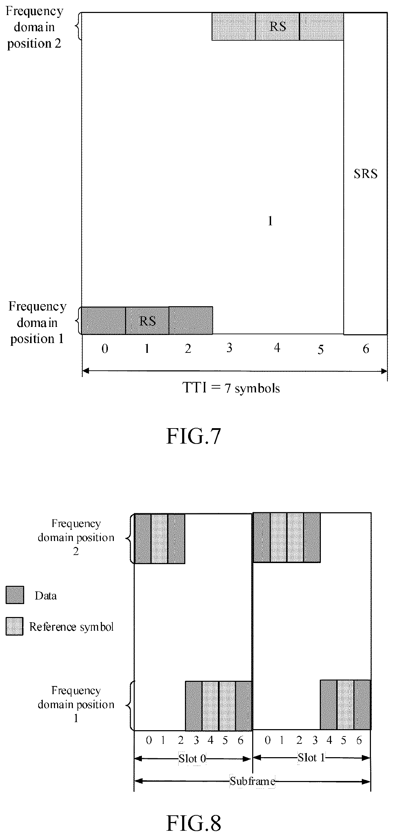

The present invention will be described hereinafter in conjunction with specific embodiments. Specific embodiment one FIG. 3 gives a schematic diagram of a frequency hopping transmitted according to a 2-2-3 structure in a 7-symbol TTI by a physical uplink control channel (PUCCH). As shown in FIG. 3, 7 symbols in the TTI may be divided into 3 groups. The number of symbols in each group is 2, 2 and 3. In this case, the frequency hopping structure is defined in a 2-2-3 structure. In the figure, a first group and a third group are located into a frequency domain position 1, and a second group is located in a frequency domain position 2. Each reference symbol in the first and second groups is located on a first symbol in the group and the reference symbol of the third group is located in a second symbol in the group.

When a 2/3-symbol short TTI in a slot is also designed in a 2-2-3 structure, i.e., the numbers of symbols of three short TTIs in the slot are 2, 2 and 3, it is favorable for multiplexing a 7-symbol PUCCH and a 2/3-symbol PUCCH on a same PRB according to the frequency hopping pattern shown in FIG. 3, and it is favorable for the 2/3-symbol PUSCH to use unoccupied resources of the PUCCH, which improves the resource utilization efficiency.

Specific embodiment two

FIG. 4 gives a schematic diagram illustrating that a PUCCH and a SRS are transmitted at the same time in a 7-symbol TTI. In FIG. 4, the PUCCH is transmitted on first 6 symbols in the TTI and the SRS is transmitted on a last symbol. The first six symbols is divided into 3 groups. The number of symbols in each group is 2, 2 and 2. In this case, the frequency hopping structure is defined in a 2-2-2 structure. In FIG.4, a first group and a third group are located into a frequency domain position 2, and a second group is located in a frequency domain position 1. Each reference symbol in all groups is located in a second symbol of the groups, which facilities receiving the RS earlier for channel estimation.

When a 2/3-symbol short TTI in a slot is also designed in a 2-2-3 structure, i.e., the numbers of symbols of three short TTIs in the slot are 2, 2 and 3, it is favorable for multiplexing a 7-symbol PUCCH and a 2-symbol PUCCH on a same PRB according to the frequency hopping pattern shown in FIG. 4, and it is favorable for the 2-symbol PUSCH to use unoccupied resources of the PUCCH, which improves the resource utilization efficiency.

Specific embodiment three

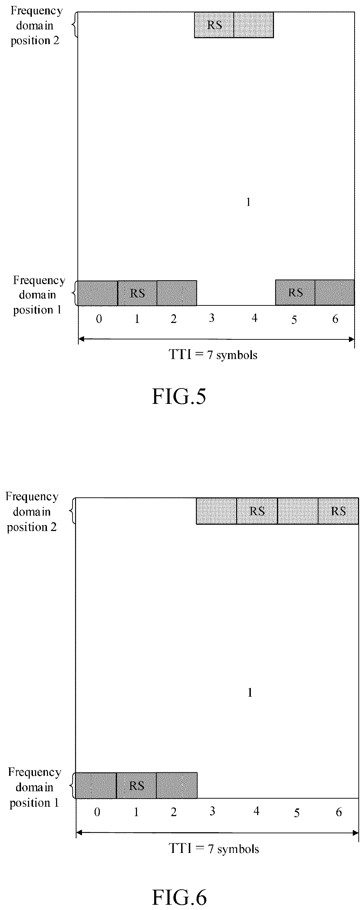

FIG. 5 gives a schematic diagram of a frequency hopping for transmitting a PUCCH in a 7-symbol TTI according to a 3-2-2 structure. In FIG. 5, 7 symbols in the TTI are divided into 3 groups. The number of symbols in each group is 2, 2 and 3. In this case, the frequency hopping structure is defined in a 3-2-2 structure. In FIG.5, a first group and a third group are located into a frequency domain position 1, and a second group is located in a frequency domain position 2. Each reference symbol in the second and third groups is located on a first symbol in the group and the reference symbol in the first group is located in a second symbol in the group.

When a 2/3-symbol short TTI in a slot is also designed in a 3-2-2 structure, i.e., the numbers of symbols of three short TTIs in the slot are 3, 2 and 2, it is favorable for multiplexing a 7-symbol PUCCH and a 2/3-symbol PUCCH on a same PRB according to the frequency hopping pattern shown in FIG. 3, and it is favorable for the 2/3-symbol PUSCH to use unoccupied resources of the PUCCH, which improves the resource utilization efficiency.

Specific embodiment four

FIG. 6 gives a schematic diagram of a frequency hopping for transmitting a PUCCH in a 7-symbol TTI according to a 3-4 structure. In FIG. 6, 7 symbols in the TTI are divided into 2 groups. The number of symbols in each group is 3 and 4. In this case, the frequency hopping structure is defined in a 3-4 structure. In FIG.6, a first group is located into a frequency domain position 1, and a second group is located in a frequency domain position 2. Each reference symbol in the first group is located on a second symbol in the group and the reference symbol of the second group is located on a second symbol and a fourth symbol in the group.

When a 2/3-symbol short TTI in a slot is designed in a 3-2-2 structure, i.e., the numbers of symbols of three short TTIs in the slot are 3, 2 and 2, it is favorable for multiplexing a 7-symbol PUCCH and a 2/3-symbol PUCCH on a same PRB according to the shown frequency hopping pattern, and it is favorable for the 2/3-symbol PUSCH to use unoccupied resources of the PUCCH, which improves the resource utilization efficiency.

It is to be noted that the frequency hopping method shown in FIG. 6 is not just limited to the PUCCH, and is also applicable to the PUSCH.

Specific embodiment five

FIG. 7 gives a schematic diagram of transmitting a PUCCH in a 7-symbol TTI according to a 3-3 structure. In FIG. 7, the PUCCH is transmitted on first 6 symbols in the TTI and the SRS is transmitted on a last symbol. In FIG. 7, first 6 symbols in the TTI are divided into 2 groups. The number of symbols in each group is 3 and 3. In this case, the frequency hopping structure is defined in a 3-3 structure. In FIG.7, a first group is located into a frequency domain position 1, and a second group is located in a frequency domain position 2. Each reference symbol in the first and second groups is located on a second symbol in each of the first and second groups .

With reference to FIGS. 6 and 7, according to a position placement mode of the reference symbol in the second group, when an SRS is provided, one reference symbol is punctured, avoiding a case of puncturing the payload.

Specific embodiment six

FIG. 8 gives a schematic diagram of a frequency hopping for transmitting7-symbol PUCCH in a Format 1/1a/1b in different slots in a subframe. Here, the Format 1/1a/1b refers to a format transmitting an SR or a 1-2bit ACK/NACK message. In FIG. 8, when the 7-symbol PUCCH is transmitted in a first slot, a first group is located in a frequency domain position 2 and a time domain includes three symbols, a second group is located in a frequency domain position 1 and the time domain includes four symbols. The reference symbol in FIG. 8 is located on symbols with symbol indexed of 1, 4 and 5 in a slot 0. When the 7-symbol PUCCH is transmitted in a second slot, a first group is located in a frequency domain position 2 and a time domain includes four symbols, a second group is located in a frequency domain position 1 and the time domain includes three symbols. The reference symbol is located on symbols with symbol indexed of 1, 2 and 5 in a slot 1. When an SRS is transmitted, the SRS is transmitted on a last symbol in the slot. Specific embodiment seven

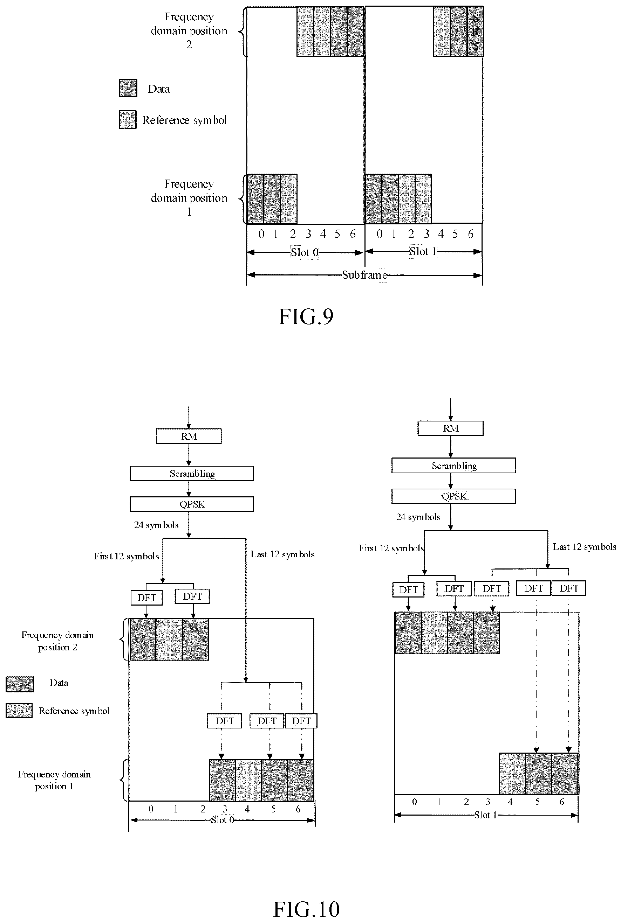

FIG. 9 gives a schematic diagram of a frequency hopping for transmitting7-symbol PUCCH in a Format 1/1a/1b in different slots in a subframe. Here, the Format 1/1a/1b refers to a format transmitting an SR or a 1-2bit ACK/NACK message. In FIG. 9, when the 7-symbol PUCCH is transmitted in a first slot, a first group shown in FIG. 9 is located in a frequency domain position 1 and a time domain includes three symbols, a second group is located in a frequency domain position 2 and the time domain includes four symbols. When the 7-symbol PUCCH is transmitted in the first slot, the first group shown in FIG. 9 is located in the frequency domain position 1 and the time domain includes four symbols, the second group is located in the frequency domain position 2 and the time domain includes three symbols. Regardless of whether the 7-symbol PUCCH transmitted by the UE is in the slot 0 or 1 of the subframe, each reference symbol is located on the symbols with the symbol indexes of 2, 3 and 4 within a 7-symbol transmission time interval. When an SRS is transmitted, the SRS is transmitted on a last symbol in the slot.

Specific embodiment eight

FIG. 10 gives a schematic diagram of a frequency hopping for transmitting7-symbol PUCCH in a Format 3 in different slots in a subframe. Here, the Format 3 refers to a format that uses an RM encoding to transmit an ACK/NACK message larger than 2 bits. In FIG. 10, when the 7-symbol PUCCH is transmitted in a first slot, a first group shown in FIG. 10 is located in a frequency domain position 2 and a time domain includes three symbols, a second group is located in a frequency domain position 1 and the time domain includes four symbols. When the 7-symbol PUCCH is transmitted in the first slot, the first group shown in FIG. 10 is located in the frequency domain position 2 and the time domain includes four symbols, the second group is located in the frequency domain position 1 and the time domain includes three symbols. Regardless of whether the 7-symbol PUCCH transmitted by the UE is in the slot 0 or 1 of the subframe, each reference symbol is located on the symbols with the symbol indexes of 1 and 4 within a 7-symbol transmission time interval. When an SRS is transmitted, the SRS is transmitted on a last symbol in the slot. Specifically, in FIG. 10, uplink control information outputs 24 symbols after the RM encoding, scrambling and QPSK. First 12 symbols of the 24 symbols in FIG. 10 are mapped on symbols with symbol indexes of 0 and 2 after DFT. Last 12 symbols of the 24 symbols are mapped on symbols with symbol with symbol indexes of 3, 5, and 6 after the DFT.

Specific embodiment nine

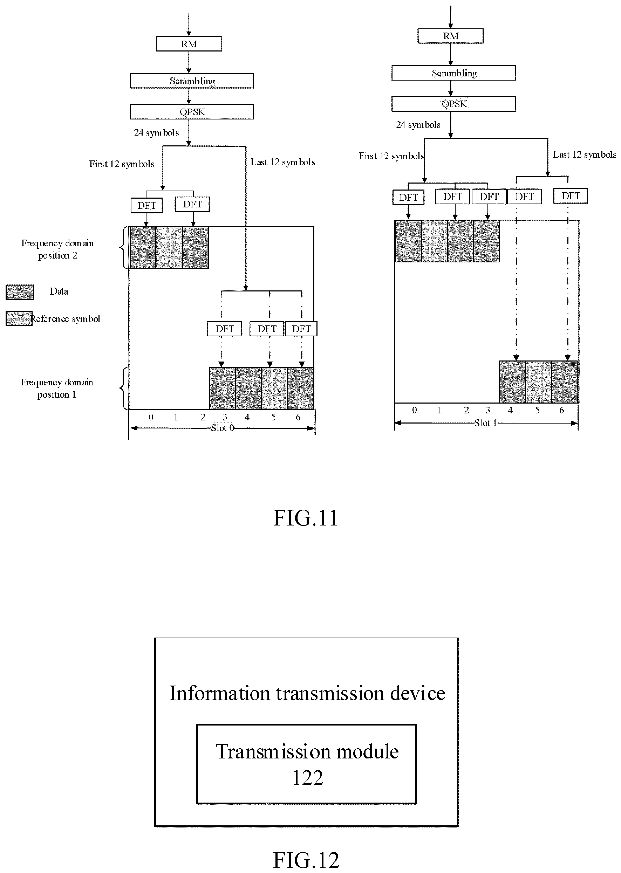

FIG. 11 gives a schematic diagram of a frequency hopping for transmitting7-symbol PUCCH in a Format 3 in different slots in a subframe. Here, the Format 3 refers to a format that uses a RM encoding to transmit an ACK/NACK message larger than 2 bits. Specifically, in FIG. 11, uplink control information outputs 24 symbols after RM encoding, scrambling and QPSK. In FIG. 11, when the 7-symbol PUCCH is in a slot 0 in the subframe, first 12 symbols of the 24 symbols are mapped on data symbols in the first group after DFT, i.e, symbols with symbol indexes of 0 and 2. Last 12 symbols of the 24 symbols are mapped on symbols in a second group after the DFT, i.e., symbol with symbol indexes of 3, 4, and 6. When the 7-symbol PUCCH is in a slot 1 in the subframe, last 12 symbols of the 24 symbols are mapped on the data symbols in the first group after the DFT, i.e., the symbol with the symbol indexes of 0, 2 and 3. Last 12 symbols of the 24 symbols are mapped on the symbols in the second group after the DFT, i.e., the symbol with the symbol indexes of 4 and 6.

From the description of the embodiment described above, it will be apparent to those skilled in the art that the method in the embodiment described above may be implemented by software plus a necessary general-purpose hardware platform, or may of course be implemented by hardware. However, in many cases, the former is a preferred implementation mode. Based on this understanding, the solutions provided by the present invention substantially, or the part contributing to the related art, may be embodied in the form of a software product. The computer software product is stored in a storage medium (such as a read-only memory (ROM)/a random access memory (RAM), a magnetic disk or an optical disk) and includes several instructions for enabling terminal equipment (which may be a mobile phone, a computer, a server, network equipment, or the like) to execute the method according to each embodiment of the present invention.

The present embodiment further provides an information transmission apparatus. The apparatus is configured to implement the above-mentioned embodiments and preferred embodiments. What has been described will not be repeated. As used below, the term "module" may be software, hardware or a combination thereof capable of implementing predetermined functions. The apparatus in the embodiment described below is preferably implemented by software, but implementation by hardware or by a combination of software and hardware is also possible and conceived.

FIG. 12 is a block diagram of an information transmission device according to an embodiment of the present invention. The device may be applied to a transmitting end. As shown in FIG. 12, the device includes a transmission module 122. The device is described below.

A transmission module is used for transmitting information on N symbols in a transmission time unit according to a preset pattern; where the preset pattern includes a preset frequency domain pattern and a preset time domain pattern, the preset frequency domain pattern includes a frequency domain position and a frequency domain resource magnitude occupied by transmitting the information in the transmission time unit, the preset time domain pattern includes K groups into which the N symbols are divided, where frequency domain patterns in adjacent groups are different, N is a positive integer and K is a positive integer.

In an optional embodiment, the above transmission time unit may include 7 symbols, and when the transmission time unit includes 7 symbols, N=7 or 6.

In an optional embodiment, when N=6, the N symbols are first six symbols in the above transmission time unit. Optionally, N may be 5 or other numbers, and when N is less than a total number of symbols included in the transmission time unit, the N symbols are the first N symbols of the transmission time unit, and the remaining symbols may be used for transmitting other specific information.

In an optional embodiment, the number of frequency domain positions M is less than or equal to K, and M is a positive integer.

In an optional embodiment, M=2, correspondingly, K≥2. Optionally, a value of M may also be 3 or other numbers, as long as M≤K is ensured.

In an optional embodiment, when M=2, the frequency domain positions are located on two sides of a system bandwidth; and when M=3, the frequency domain positions are located on two sides of the system bandwidth and in the middle of the system bandwidth. When M>3, the frequency domain positions may be evenly allocated in the system bandwidth. In another optional embodiment, the frequency domain resource magnitude corresponding to each frequency domain position is one PRB; and the frequency domain resource magnitude corresponding to different frequency domain position may be the same or different. In another optional embodiment, the frequency domain resource magnitude corresponding to each frequency domain position is a multiple of 12 subcarriers.

In an optional embodiment, when the frequency domain resource magnitude corresponding to each frequency domain position is one PRB, an index of the one PRB is determined by at least one of: a total number of PRBs included in the system bandwidth; a channel resource index allocated to the transmitting end; and a number of subcarriers included in the PRB.

In an optional embodiment, K=2 or K=3, in another optional embodiment, a number of symbols in each group is one, two, three or four. It is to be noted that the number of the groups and the number of symbols in each group may be flexibly configured according to the actual situation, and the values described above are merely preferred embodiments.

In an optional embodiment, when K=2, the method includes at least one of: in the preset frequency domain pattern, the frequency domain positions occupied by two groups are different; in the preset time domain pattern, symbols included in one group of the two groups are first four symbols, and symbols included in another group of the two groups are last three symbols, or the symbols included in one group of the two groups are first three symbols and the symbols included in another group of the two groups are last four symbols; when the number of symbols of the transmission time unit is 7 and N=6, the symbols included in one group of the two groups are symbols with symbol indexes of 0, 1 and 2, the symbols included in another group of the two groups are symbols with symbol indexes of 3, 4, and 5, or the symbols included in one group of the two groups are the symbols with the symbol indexes of 0, 1, 2 and 3, and the symbols included in another group of the two groups are the symbols with the symbol indexes of 4 and 5;when the number of symbols of the transmission time unit is 3 and N=3, the symbols included in one group of the two groups are the symbols with symbol indexes of 0 and 1, the symbol included in another group of the two groups is the symbol with the symbol index of 2, or the symbol included in one group of the two groups is the symbol with the symbol index of 0, and the symbols included in another group of the two groups are the symbols with the symbol indexes of 1 and 2; and when the number of symbols of the transmission time unit is 3 and N=2, the symbol included in one group of the two groups is the symbol with the symbol index of 0, the symbol included in another group of the two groups is the symbol with the symbol index of 1.

In an optional embodiment, when the number of the symbols of the transmission time unit is 7, the method includes one of: when the symbols included in a first group of the two groups are the first four symbols, and the symbols included in a second group of the two groups are the last three symbols, a reference symbol in the first group is located on a second symbol and a third symbol in the first group (i.e., the second symbol and the third symbol of the first four symbols to which the following description is similar), the reference symbol in the first group is located on the second symbol in the first group; a reference symbol in the second group is located on a second symbol in the second group, or the reference symbol in the second group is located on a first symbol in the second group; when the symbols included in the first group of the two groups are the first three symbols, and the symbols included in the second group of the two groups are the last four symbols, the reference symbol in the first group is located on the second symbol in the first group, or the reference symbol in the first group is located on a first symbol in the first group; the reference symbol in the second group is located on the second symbol and the third symbol in the second group, or the reference symbol in the second group is located on the second symbol and the fourth symbol in the second group; or the reference symbol in the second group is located on the second symbol in the second group, or the reference symbol in the second group is located on the first symbol and the third symbol in the second group; when the symbols included in one group of the two groups are the symbols with the symbol indexes of 0, 1 and 2, and the symbols included in another group of the two groups are the symbols with the symbol indexes of 3, 4, and 5, the reference symbol in the first group is located on the second symbol in the first group, or the reference symbol in the first group is located on the first symbol in the first group; or the reference symbol in the second group is located on the second symbol in the second group, or the reference symbol in the second group is located on the first symbol in the second group. In this embodiment, the reference symbol is used for transmitting a symbol of reference information, and the reference information is used for data demodulation. when the symbols included in one group of the two groups are the symbols with the symbol indexes of 0, 1, 2 and 3, and the symbols included in another group of the two groups are the symbols with the symbol indexes of 4 and 5, the reference symbol in the first group is located on the second symbol and the third symbol in the first group, or the reference symbol in the first group is located on the second symbol in the first group; the reference symbol in the second group is located on the second symbol in the second group, or the reference symbol in the second group is located on the first symbol in the second group.

In an optional embodiment, when the number of the symbols of the transmission time unit is 7, the method includes one of: when the symbols included in the first group of the two groups are the first four symbols, and the symbols included in the second group of the two groups are the last three symbols, the reference symbol in the first group is located on the first symbol and the second symbol in the first group, and the reference symbol in the second group is located on the first symbol in the second group, or the reference symbol in the first group is located on the third symbol and the fourth symbol in the first group and the reference symbol in the second group is located on the first symbol in the second group; when the symbols included in the first group of the two groups are the first three symbols, and the symbols included in the second group of the two groups are the last four symbols, the reference symbol in the first group is located on the first symbol in the first group, and the reference symbol in the second group is located on the first symbol and the second symbol in the second group, or the reference symbol in the first group is located on the third symbol in the first group and the reference symbol in the second group is located on the first symbol and the second symbol in the second group; when the symbols included in one group of the two groups are the symbols with the symbol indexes of 0, 1 and 2, and the symbols included in another group of the two groups are the symbols with the symbol indexes of 3, 4, and 5, the reference symbol in the first group is located on the first symbol in the first group, and the reference symbol in the second group is located on the first symbol in the second group; and when the symbols included in one group of the two groups are the symbols with the symbol indexes of 0, 1, 2 and 3, and the symbols included in another group of the two groups are the symbols with the symbol indexes of 4 and 5, the reference symbol in the first group is located on the third symbol and the fourth symbol in the first group, and the reference symbol in the second group is located on the first symbol in the second group.

In an optional embodiment, when the number of the symbols of the transmission time unit is 7 and K=2, the method includes one of: when a transmission time interval is located in a slot 0 in a subframe, the number of symbols included in a first group is three and the number of symbols included in a second group is four; and when the transmission time interval is located in a slot 1 in the subframe, the number of symbols included in the first group is four and the number of symbols included in the second group is three, or the number of symbols included in the first group is four and the number of symbols included in the second group is two.

In an optional embodiment, when the number of the symbols of the transmission time unit is 7 and K=2, and the sent information is uplink control information of X bits, the method includes one of: a reference symbol is located on a symbol with an index of 1 and a symbol with an index of 4 in a transmission time interval; the reference symbol is located on the symbol with the index of 1 and a symbol with an index of 5 in the transmission time interval; the reference symbol is located on the symbol with the index of 0 and a symbol with an index of 3 in the transmission time interval; when the transmission time interval is located in a slot 0 in a subframe, the reference symbol is located on the symbol with the index of 0 and the symbol with the index of 3 in the transmission time interval; when the transmission time interval is located in a slot 1 in the subframe, the reference symbol is located on the symbol with the index of 0 and the symbol with the index of 4 in the transmission time interval; where X is an integer greater than 2, and an index number in indexes of the transmission time interval starts from 0.

In an optional embodiment, a value of an index $n_{PRB}$ of a PRB corresponding to the frequency domain positions of the two groups includes:

$$n_{PRB} = \begin{cases} \left\lfloor \dfrac{m}{2} \right\rfloor, where, (m + n_{group} \bmod 2) \bmod 2 = 0 \\ N_{RB} - 1 - \left\lfloor \dfrac{m}{2} \right\rfloor, where, (m + n_{group} \bmod 2) \bmod 2 = 1 \end{cases},$$

m denotes an integer, $n_{group}$ denotes a group index, $N_{RB}$ denotes a total number of PRBs in a system bandwidth.

$$m = \left\lfloor \frac{n_{channel}}{N_{sc}} \right\rfloor$$

In an optional embodiment, , $n_{channel}$ denotes a channel resource index allocated to the transmitting end; and $N_{sc}$ denotes a number of subcarriers included in one PRB.

$$m = \left\lfloor \frac{n_{channel}}{N_{SF}^{PUCCH,7}} \right\rfloor$$

In an optional embodiment, when the sent information is uplink control information of X bits,

, where $n_{channel}$ denotes a channel resource index allocated to the transmitting end and $N_{SF}^{PUCCH,7}$ denotes a time domain OCC length, X is an integer greater than 2.

In an optional embodiment, when a number of symbols of the transmission time unit is 7 and K=2, and the sent information is uplink control information of X bits and encoding adopts a RM encoding, a number of symbols output after modulation is Y, Y is a multiple of 12, the method includes one of: mapping modulation symbols with indexes of 0-Y/2-1 on symbols with indexes of 0 and 2 after discrete Fourier transform (DFT), mapping modulation symbols with indexes of Y/2~Y-1on symbols with indexes of 3, 5 and 6 after the DFT, or in case of using a last symbol to send a sounding reference signal (SRS), mapping modulation symbols with indexes of Y/2~Y-1 on the symbols with the indexes of 3 and 5 after the DFT; mapping the modulation symbols with the indexes of 0~Y/2-1 on the symbols with indexes of 0 and 2 after the DFT, mapping the modulation symbols with the indexes of Y/2~Y-1 on the symbols with indexes of 3, 4 and 6 after the DFT, or in case of using the last symbol to send the SRS, mapping the modulation symbols with the indexes of Y/2~Y-1 on the symbols with the indexes of 3 and 4 after the DFT; mapping the modulation symbols with the indexes of 0~Y/2-1 on a data symbol of a first group after the DFT, mapping the modulation symbols with indexes of Y/2~Y-1 on the data symbol of the first group after the DFT; where X is a positive integer greater than 2

In an optional embodiment, when a number of symbols of the transmission time unit is 7 and K=2, and the sent information is uplink control information of X bits and encoding adopts a TBCC encoding, a number of symbols output after modulation is Y, Y is a multiple of 6, the method includes one of: mapping modulation symbols on symbols with indexes of 0, 2, 3, 5 and 6 after DFT, when using a last symbol to send a SRS, mapping the modulation symbols on the symbols with the indexes of 0, 2, 3 and 5 after the DFT; and mapping the modulation symbols on the symbols with the indexes of 0, 2, 3, 4 and 6 after DFT, when using the last symbol to send the SRS, mapping the modulation symbols on the symbols with the indexes of 0, 2, 3 and 4 after the DFT.

In an optional embodiment, when K=3, the method includes at least one of: in the preset frequency domain pattern, a first group and a second group in three groups occupy different frequency domain positions, and the first group and a third group occupy a same frequency domain position; when N=7, in the preset time domain pattern, in the three groups, symbols included in the first group are two symbols with symbol indexes of 0 and 1, symbols included in the second group are two symbols with symbol indexes of 2 and 3 and symbols included in the third group are three symbols with symbol indexes of 4, 5 and 6; or in the three groups, the symbols included in the first group are three symbols with the symbol indexes of 0, 1 and 2, the symbols included in the second group are two symbols with the symbol indexes of 3 and 4, and the symbols included in the third group are two symbols with the symbol indexes of 5 and 6; and when N=6, in the preset time domain pattern, in the three groups, the symbols included in the first group are two symbols with the symbol indexes of 0 and 1, the symbols included in the second group are two symbols with the symbol indexes of 2 and 3, and the symbols included in the third group are two symbols with the symbol indexes of 4 and 5.

In an optional embodiment, the method includes one of: when in the three groups, the symbols included in the first group are two symbols with the symbol indexes of 0 and 1, and the symbols included in the second group are two symbols with the symbol indexes of 2 and 3, and the symbols included in the third group are three symbols with the symbol indexes of 4, 5 and 6, a reference symbol in each group is located on a first symbol in the each group; or the reference symbol in the first group is located on a first symbol in the first group, the reference symbol in the second group is located on a first symbol in the second group, and the reference symbol in the third group is located on a second symbol in the third group; when in the three groups, the symbols included in the first group are three symbols with the symbol indexes of 0, 1 and 2, and the symbols included in the second group are two symbols with the symbol indexes of 3 and 4, and the symbols included in the third group are two symbols with the symbol indexes of 5 and 6, the reference symbol in each group is located on the first symbol in the each group; or the reference symbol in the first group is located on a second symbol in the first group, the reference symbol in the second group is located on the first symbol in the second group, and the reference symbol in the third group is located on a first symbol in the third group; when in the three groups, the symbols included in the first group are two symbols with the symbol indexes of 0 and 1, and the symbols included in the second group are two symbols with the symbol indexes of 2 and 3, and the symbols included in the third group are two symbols with the symbol indexes of 4 and 5, the reference symbol in each group is located on the first symbol in the each group.

In an optional embodiment, a value of an index $n_{PRB}$ of a PRB corresponding to the frequency domain positions of the three groups includes:

$$n_{PRB} = \begin{cases} \left\lfloor \dfrac{m}{2} \right\rfloor, where, (m + n_{group} \bmod 3) \bmod 2 = 0 \\ N_{RB} - 1 - \left\lfloor \dfrac{m}{2} \right\rfloor, where, (m + n_{group} \bmod 3) \bmod 2 = 1 \end{cases},$$

m denotes an integer, $n_{group}$ denotes a group index, $N_{RB}$ denotes a total number of PRBs in a system bandwidth.

$$m = \left\lfloor \frac{n_{channel}}{N_{sc}} \right\rfloor$$

In an optional embodiment, $n_{channel}$ denotes a channel resource index allocated to the transmitting end; and $N_{sc}$ denotes a number of subcarriers included in one PRB.

It is to be noted that the various modules described above may be implemented by software or hardware. Implementation by hardware may, but may not necessarily, be performed in the following manners: the various modules described above are located in a same processor, or the various modules described above are located in their respective processors in any combination form.

The embodiment of the present invention further provides a storage medium. Optionally, in this embodiment, the storage medium may be configured to execute one of or a combination of the steps in the embodiments described above.

Optionally, in the embodiment, the storage medium may include, but is not limited to, a USB flash disk, a read-only memory (ROM), a random access memory (RAM), a mobile hard disk, a magnetic disk, an optical disk or another medium capable of storing the program codes. Optionally, in this embodiment, a processor executes one of or a combination of the steps in the method described in the above embodiments according to the program codes already stored in the storage medium.

Optionally, for specific examples in this embodiment, reference may be made to the examples described in the above-mentioned embodiments and optional embodiments, and repetition will not be made in this embodiment.

Apparently, it should be understood by those skilled in the art that each of the above-mentioned modules or steps of the present invention may be implemented by a general-purpose computing device, the modules or steps may be concentrated on a single computing device or distributed on a network composed of multiple computing devices, and alternatively, the modules or steps may be implemented by program codes executable by the computing device, so that the modules or steps may be stored in a storage device and executed by the computing device. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

INDUSTRIAL APPLICABILITY

As described above, the information transmission method and device provided by the embodiments of the present invention have the following beneficial effects: solving the problem in the existing art where the system performance is degraded and the cell coverage is affected, and achieving the effect of improving the system performance and avoiding affecting the cell coverage.

**Claims**

1. An information transmission method, comprising:

transmitting (S202), by a transmitting end, information on N symbols in a transmission time unit according to a preset pattern;
wherein the preset pattern comprises a preset frequency domain pattern and a preset time domain pattern, and the preset frequency domain pattern comprises M frequency domain positions, M being a positive integer, and a frequency domain resource size corresponding to each of the M frequency domain positions is occupied by transmitting the information in the transmission time unit;

wherein the preset time domain pattern comprises K groups into which the N symbols are divided, wherein the K groups are consecutive in time domain, and frequency domain positions in any two adjacent groups in the K groups are different, N is a positive integer and N is greater than 1, and K is a positive integer and K is greater than 1; and

wherein the transmission time unit comprises seven symbols, and the method **characterised in that** the number of frequency domain positions M corresponding to the K groups is less than or equal to K.

2. The method of claim 1, wherein N=7 or 6.

3. The method of claim 2, wherein
   in a case that N=6, the N symbols are first six symbols in the transmission time unit.

4. The method of claim 1, wherein M equals to 2;
   wherein the method further comprises at least one of:

   the frequency domain positions are located on two sides of a system bandwidth;
   the frequency domain resource size corresponding to each frequency domain position is one physical resource block, PRB; and
   the frequency domain resource size corresponding to each frequency domain position is a multiple of 12 subcarriers.

5. The method of claim 4, wherein in a case that the frequency domain resource size corresponding to each frequency domain position is one PRB, an index of the one PRB is determined by at least one of:

   a total number of PRBs comprised in the system bandwidth;
   a channel resource index allocated to the transmitting end; and
   a number of subcarriers comprised in the one PRB.

6. The method of claim 1, comprising at least one of:

   K=2 or K=3; and
   a number of symbols in each group is one, two, three or four.

7. The method of claim 6, wherein in a case that K=2, the method comprises at least one of:

   in a case that N=7, in the preset time domain pattern, the symbols comprised in one group of the two groups are first four symbols, and the symbols comprised in another group of the two groups are last three symbols; or the symbols comprised in one group of the two groups are first three symbols and the symbols comprised in another group of the two groups are last four symbols; or
   in a case that N=6, the symbols comprised in one group of the two groups are symbols having symbol indexes of 0, 1 and 2, the symbols comprised in another group of the two groups are symbols having symbol indexes of 3, 4, and 5; or the symbols comprised in one group of the two groups are the symbols having the symbol indexes of 0, 1, 2 and 3, and the symbols comprised in another group of the two groups are the symbols having the symbol indexes of 4 and 5.

8. The method of claim 7, wherein the method further comprises one of:

   in a case that the symbols comprised in a first group of the two groups are the first four symbols, and the symbols comprised in a second group of the two groups are the last three symbols, a reference symbol in the first group is located on a second symbol and a third symbol in the first group, or the reference symbol in the first group is located on the second symbol; a reference symbol in the second group is located on a second symbol in the second group, or the reference symbol in the second group is located on a first symbol in the second group;
   in a case that the symbols comprised in the first group of the two groups are the first three symbols, and the symbols comprised in the second group of the two groups are the last four symbols, the reference symbol in the first group is located on a second symbol in the first group, or the reference symbol in the first group is located on a first symbol in the first group; the reference symbol in the second group is located on a second symbol and a third symbol in the second group, or the reference symbol in the second group is located on the second symbol and a fourth symbol in the second group, or the reference symbol in the second group is located on the second symbol in the second group, or the reference symbol in the second group is located on a first symbol and the third symbol in the second group;

in a case that the symbols comprised in one group of the two groups are the symbols having the symbol indexes of 0, 1 and 2, and the symbols comprised in another group of the two groups are the symbols having the symbol indexes of 3, 4, and 5, the reference symbol in the first group is located on a second symbol in the first group, or the reference symbol in the first group is located on a first symbol in the first group; the reference symbol in the second group is located on a second symbol in the second group, or the reference symbol in the second group is located on a first symbol in the second group; and

in a case that the symbols comprised in one group of the two groups are the symbols having the symbol indexes of 0, 1, 2 and 3, and the symbols comprised in another group of the two groups are the symbols having the symbol indexes of 4 and 5, the reference symbol in the first group is located on a second symbol and a third symbol in the first group, or the reference symbol in the first group is located on the second symbol in the first group; the reference symbol in the second group is located on a second symbol in the second group, or the reference symbol in the second group is located on a first symbol in the second group.

9. The method of claim 1, wherein in a case that K=2, the method comprises one of:

in a case that a transmission time interval is located in a slot 0 in a subframe, a number of symbols comprised in a first group is three and a number of symbols comprised in a second group is four; and

in a case that the transmission time interval is located in a slot 1 in the subframe, a number of symbols comprised in the first group is four and a number of symbols comprised in the second group is three; or the number of the symbols comprised in the first group is four and the number of the symbols comprised in the second group is two.

10. The method of claim 1, wherein in a case that K=2 and the sent information is uplink control information of X bits, the method comprises one of:

a reference symbol is located on a symbol having an index of 1 and a symbol having an index of 4 in a transmission time interval;

the reference symbol is located on the symbol having the index of 1 and a symbol having an index of 5 in the transmission time interval;

the reference symbol is located on a symbol having an index of 0 and a symbol having an index of 3 in the transmission time interval;

in a case that the transmission time interval is located in a slot 0 in a subframe, the reference symbol is located on a symbol having an index of 0 and a symbol having an index of 3 in the transmission time interval;

in a case that the transmission time interval is located in a slot 1 in the subframe, the reference symbol is located on a symbol having an index of 0 and a symbol having an index of 4 in the transmission time interval;

wherein X is an integer greater than 2, and an index number of indexes in the transmission time interval starts from 0.

11. An information transmission device, applied to a transmitting end, comprising:

a transmission module (122), which is configured to transmit information on N symbols in a transmission time unit according to a preset pattern;

wherein the preset pattern comprises a preset frequency domain pattern and a preset time domain pattern, and the preset frequency domain pattern comprises M frequency domain positions, M being a positive integer, and a frequency domain resource size corresponding to each of the M frequency domain positions is occupied by transmitting the information in the transmission time unit;

wherein the preset time domain pattern comprises K groups into which the N symbols are divided, wherein the K groups are consecutive in time domain, and frequency domain positions in any two adjacent groups in the K groups are different, N is a positive integer and N is greater than 1, and K is a positive integer and K is greater than 1; and

wherein the transmission time unit comprises seven symbols, and the device **characterised in that** a number of frequency domain positions M corresponding to the K groups is less than or equal to K.

12. The device of claim 11, wherein N=7 or 6.

**13.** The device of claim 11, wherein M equals to 2; and
wherein the device further comprises at least one of:

the frequency domain positions are located on two sides of a system bandwidth;
the frequency domain resource size corresponding to each frequency domain position is one physical resource block, PRB; and
the frequency domain resource size corresponding to each frequency domain position is a multiple of 12 subcarriers.

**14.** The device of claim 13, wherein in a case that the frequency domain resource size corresponding to each frequency domain position is one PRB, an index of the one PRB is determined by at least one of:

a total number of PRBs comprised in the system bandwidth;
a channel resource index allocated to the transmitting end; and
a number of subcarriers comprised in the one PRB.

**15.** The device of claim 11, comprising at least one of:

K=2 or K=3; and
a number of symbols in each group is one, two, three or four.

**Patentansprüche**

**1.** Informationsübertragungsverfahren, umfassend:

Übertragen (S202), durch eine Sendeseite, Informationen über N Symbole in einer Übertragungszeiteinheit nach einem voreingestellten Muster;
wobei das voreingestellte Muster ein voreingestelltes Frequenzdomainsmuster und ein voreingestelltes Zeitdomainsmuster umfasst, und das voreingestellte Frequenzdomainsmuster M Frequenzdomainspositionen umfasst, wobei M eine positive ganze Zahl ist,
und eine Frequenzdomainsressourcengröße, die jeder der M Frequenzdomainspositionen entspricht, durch Übertragen der Informationen in der Übertragungszeiteinheit belegt wird;
wobei das voreingestellte Zeitdomainsmuster K Gruppen umfasst, in die die N Symbole geteilt sind, wobei die K Gruppen im Zeitdomain aufeinander folgen und Frequenzdomainspositionen in zwei beliebigen benachbarten Gruppen in den K Gruppen unterschiedlich sind, N eine positive ganze Zahl ist und N größer als 1 ist, und K eine positive ganze Zahl ist und K größer als 1 ist; und
wobei die Übertragungszeiteinheit sieben Symbole umfasst, und das Verfahren **dadurch gekennzeichnet ist, dass** die Anzahl der den K Gruppen entsprechenden Frequenzdomainspositionen M kleiner oder gleich K ist.

**2.** Verfahren nach Anspruch 1, wobei N=7 oder 6.

**3.** Verfahren nach Anspruch 2, wobei
in einem Fall dass N=6 sind die N-Symbole die ersten sechs Symbole in der Übertragungszeiteinheit.

**4.** Verfahren nach Anspruch 1, wobei M gleich 2 ist;
wobei das Verfahren ferner mindestens einer der folgenden Situationen umfasst:

die Frequenzdomainspositionen befinden sich auf zwei Seiten einer Systembandbreite;
die Frequenzdomainsressourcengröße, die jeder Frequenzdomainsposition entspricht, ist ein physikalischer Ressourcenblock, PRB; und
die Frequenzdomainsressourcengröße, die jeder Frequenzdomainsposition entspricht, ist ein Vielfaches von 12 Unterträgern.

**5.** Verfahren nach Anspruch 4, wobei in einem Fall, dass die Frequenzbereichsressourcengröße, die jeder Frequenzdomainsposition entspricht, ein PRB ist, ein Index des einen PRB durch mindestens eines der folgenden Elemente bestimmt wird:

eine Gesamtzahl von PRB, die in der Systembandbreite enthalten sind;
einen der Sendeseite zugewiesenen Kanalressourcenindex; und
eine Anzahl von Unterträgern, die in einem PRB enthalten sind.

**6.** Vorrichtung nach Anspruch 1, umfassend mindestens eines der folgenden Situationen:

K=2 oder K=3; und
eine Anzahl von Symbolen in jeder Gruppe ist eins, zwei, drei oder vier.

**7.** Verfahren nach Anspruch 6, wobei in einem Fall, dass K=2, das Verfahren mindestens einer der folgenden Situationen umfasst:

in einem Fall dass N=7 ist, in dem voreingestellten Zeitdomainsmuster sind die Symbole, die in einer Gruppe der zwei Gruppen enthalten sind, die ersten vier Symbole und die Symbole, die in einer anderen Gruppe der zwei Gruppen enthalten sind, sind die letzten drei Symbole; oder die Symbole, die in einer Gruppe der zwei Gruppen enthalten sind, sind die ersten drei Symbole und die Symbole, die in einer anderen Gruppe der zwei Gruppen enthalten sind, sind die letzten vier Symbole; oder
in einem Fall dass N=6 ist, sind die Symbole, die in einer Gruppe der zwei Gruppen enthalten sind, Symbole mit den Symbolindizes 0, 1 und 2, die Symbole, die in einer anderen Gruppe der zwei Gruppen enthalten sind, sind Symbole mit den Symbolindizes 3, 4 und 5; oder die Symbole, die in einer Gruppe der zwei Gruppen enthalten sind, sind die Symbole mit den Symbolindizes 0, 1, 2 und 3, und die Symbole, die in einer anderen Gruppe der zwei Gruppen enthalten sind, sind die Symbole mit den Symbolindizes 4 und 5.

**8.** Verfahren nach Anspruch 7, wobei das Verfahren ferner umfasst:

in einem Fall dass die Symbole, die in einer ersten Gruppe der zwei Gruppen enthalten sind, die ersten vier Symbole sind, und die Symbole, die in einer zweiten Gruppe der zwei Gruppen enthalten sind, die letzten drei Symbole sind, befindet sich ein Referenzsymbol in der ersten Gruppe sich auf einem zweiten Symbol und einem dritten Symbol in der ersten Gruppe, oder das Referenzsymbol in der ersten Gruppe befindet sich auf dem zweiten Symbol; ein Referenzsymbol in der zweiten Gruppe befindet sich auf einem zweiten Symbol in der zweiten Gruppe, oder das Referenzsymbol in der zweiten Gruppe befindet sich auf einem ersten Symbol in der zweiten Gruppe;
in einem Fall dass die Symbole, die in der ersten Gruppe der zwei Gruppen enthalten sind, die ersten drei Symbole sind und die Symbole, die in der zweiten Gruppe der zwei Gruppen enthalten sind, die letzten vier Symbole sind, befindet sich das Referenzsymbol in der ersten Gruppe auf einem zweiten Symbol in der ersten Gruppe, oder das Referenzsymbol in der ersten Gruppe befindet sich auf einem ersten Symbol in der ersten Gruppe; das Referenzsymbol in der zweiten Gruppe befindet sich auf einem zweiten Symbol und einem dritten Symbol in der zweiten Gruppe, oder das Referenzsymbol in der zweiten Gruppe befindet sich auf dem zweiten Symbol und einem vierten Symbol in der zweiten Gruppe, oder das Referenzsymbol in der zweiten Gruppe befindet sich auf dem zweiten Symbol in der zweiten Gruppe, oder das Referenzsymbol in der zweiten Gruppe befindet sich auf einem ersten Symbol und dem dritten Symbol in der zweiten Gruppe;
in einem Fall dass die Symbole, die in einer Gruppe der zwei Gruppen enthalten sind, die Symbole mit den Symbolindizes 0, 1 und 2 sind, und die Symbole, die in einer anderen Gruppe der zwei Gruppen enthalten sind, die Symbole mit den Symbolindizes 3, 4 und 5 sind, befindet sich das Referenzsymbol in der ersten Gruppe auf einem zweiten Symbol in der ersten Gruppe, oder das Referenzsymbol in der ersten Gruppe befindet sich auf einem ersten Symbol in der ersten Gruppe; das Referenzsymbol in der zweiten Gruppe befindet sich auf einem zweiten Symbol in der zweiten Gruppe, oder das Referenzsymbol in der zweiten Gruppe befindet sich auf einem ersten Symbol in der zweiten Gruppe; und
in einem Fall dass die Symbole, die in einer Gruppe der zwei Gruppen enthalten sind, die Symbole mit den Symbolindizes 0, 1, 2 und 3 sind, und die Symbole, die in einer anderen Gruppe der zwei Gruppen enthalten sind, die Symbole mit den Symbolindizes 4 und 5 sind, befindet sich das Referenzsymbol in der ersten Gruppe auf einem zweiten Symbol und einem dritten Symbol in der ersten Gruppe, oder das Referenzsymbol in der ersten Gruppe befindet sich auf dem zweiten Symbol in der ersten Gruppe; das Referenzsymbol in der zweiten Gruppe befindet sich auf einem zweiten Symbol in der zweiten Gruppe, oder das Referenzsymbol in der zweiten Gruppe befindet sich auf einem ersten Symbol in der zweiten Gruppe.

**9.** Verfahren nach Anspruch 1, wobei in einem Fall, dass K=2 ist, umfasst das Verfahren eine der folgenden Situationen umfasst:

in einem Fall dass ein Sendezeitbereich in einem Schlitz O in einem Subrahmen liegt, ist eine Anzahl von Symbolen, die in einer ersten Gruppe enthalten sind, drei und eine Anzahl von Symbolen, die in einer zweiten Gruppe enthalten sind, ist vier; und

in einem Fall dass sich der Sendezeitbereich in einem Schlitz 1 in dem Subrahmen befindet, ist eine Anzahl von Symbolen, die in der ersten Gruppe enthalten sind, vier und eine Anzahl von Symbolen, die in der zweiten Gruppe enthalten sind, ist drei; oder die Anzahl der Symbole, die in der ersten Gruppe enthalten sind, ist vier und die Anzahl der Symbole, die in der zweiten Gruppe enthalten sind, ist zwei.

10. Verfahren nach Anspruch 1, wobei in einem Fall, dass K=2 ist und die gesendete Information eine Aufwärtsstrecken-Steuerinformation von X Bits ist, umfasst das Verfahren eine der folgenden Situationen:

ein Referenzsymbol befindet sich auf einem Symbol mit einem Index von 1 und einem Symbol mit einem Index von 4 in einem Übertragungszeitbereich;

das Referenzsymbol befindet sich auf dem Symbol mit dem Index 1 und einem Symbol mit einem Index von 5 im Übertragungszeitbereich;

das Referenzsymbol befindet sich auf einem Symbol mit einem Index von O und einem Symbol mit einem Index von 3 im Übertragungszeitbereich;

in einem Fall dass sich der Übertragungszeitintbereich in einem Schlitz O in einem Subrahmen befindet, befindet sich das Referenzsymbol auf einem Symbol mit einem Index von O und einem Symbol mit einem Index von 3 in dem Übertragungszeitbereich;

in einem Fall dass sich der Sendezeitbereich in einem Schlitz 1 in dem Subrahmen befindet, befindet sich das Referenzsymbol auf einem Symbol mit einem Index von O und einem Symbol mit einem Index von 4 in dem Sendezeitbereich;

wobei X eine ganze Zahl größer als 2 ist und eine Indexzahl von Indizes in dem Übertragungszeitbereich ab 0 beginnt.

11. Informationsübertragungsvorrichtung, die an einer Sendeseite angebracht ist, umfassend:

ein Übertragungsmodul (122), das so konfiguriert ist, dass es Informationen über N Symbole in einer Übertragungszeiteinheit nach einem voreingestellten Muster überträgt;

wobei das voreingestellte Muster ein voreingestelltes Frequenzdomainsmuster und ein voreingestelltes Zeitdomainsmuster umfasst, und das voreingestellte Frequenzdomainsmuster M Frequenzdomainspositionen umfasst, wobei M eine positive ganze Zahl ist, und wobei eine Frequenzdomainressourcengröße, die jeder der M Frequenzdomainspositionen entspricht, durch Übertragen der Information in der Übertragungszeiteinheit belegt wird;

wobei das voreingestellte Zeitdomainsmuster K Gruppen umfasst, in die die N Symbole geteilt sind, wobei die K Gruppen im Zeitdomain aufeinander folgen und Frequenzdomainspositionen in zwei beliebigen benachbarten Gruppen in den K Gruppen unterschiedlich sind, N eine positive ganze Zahl ist und N größer als 1 ist, und K eine positive ganze Zahl ist und K größer als 1 ist; und

wobei die Übertragungszeiteinheit sieben Symbole umfasst, und die Vorrichtung **dadurch gekennzeichnet ist, dass** eine Anzahl von Frequenzdomainspositionen M, die den K Gruppen entsprechen, kleiner oder gleich K ist.

12. Vorrichtung nach Anspruch 11, wobei N=7 oder 6.

13. Vorrichtung nach Anspruch 11, wobei M gleich 2 ist; und
wobei die Vorrichtung ferner mindestens eine der folgenden Situationen umfasst:

die Frequenzdomainspositionen befinden sich auf zwei Seiten einer Systembandbreite;

die Frequenzdomainsressourcengröße, die jeder Frequenzdomainsposition entspricht, ist ein physikalischer Ressourcenblock, PRB; und

die Frequenzdomainsressourcengröße, die jeder Frequenzdomainsposition entspricht, ist ein Vielfaches von 12 Unterträgern.

14. Vorrichtung nach Anspruch 13, wobei in einem Fall dass die Frequenzdomainressourcengröße, die jeder Frequenzdomainsposition entspricht, ein PRB ist, wird ein Index des einen PRB durch mindestens eines der folgenden Elemente bestimmt:

eine Gesamtzahl von PRB, die in der Systembandbreite enthalten sind;
einen der Sendeseite zugewiesenen Kanalressourcenindex; und
eine Anzahl von Unterträgern, die in einem PRB enthalten sind.

**15.** Vorrichtung nach Anspruch 11, umfassend mindestens eine der folgenden Situationen:

K=2 oder K=3; und
eine Anzahl von Symbolen in jeder Gruppe ist eins, zwei, drei oder vier.

**Revendications**

**1.** Procédé de transmission d'informations, comprenant:

la transmission (S202), par une extrémité de transmission, d'informations sur N symboles dans une unité de temps de transmission selon un modèle prédéfini;
dans lequel le modèle prédéfini comprend un modèle de domaine fréquentiel prédéfini et un modèle de domaine temporel prédéfini, et le modèle de domaine fréquentiel prédéfini comprend M positions dans le domaine fréquentiel, M étant un nombre entier positif,
et une taille de ressource dans le domaine fréquentiel correspondant à chacune des M positions dans le domaine fréquentiel est occupée par la transmission des informations dans l'unité de temps de transmission;
dans lequel le motif prédéfini dans le domaine temporel comprend K groupes dans lesquels les N symboles sont divisés, dans lequel les K groupes sont consécutifs dans le domaine temporel et les positions dans le domaine fréquentiel de deux groupes adjacents quelconques dans les K groupes sont différentes, N est un nombre entier positif et N est supérieur à 1, et K est un nombre entier positif et K est supérieur à 1; et
dans lequel l'unité de temps de transmission comprend sept symboles, et le procédé étant **caractérisé en ce que** le nombre de positions dans le domaine fréquentiel M correspondant aux K groupes est inférieur ou égal à K.

**2.** Procédé selon la revendication 1, dans lequel N=7 ou 6.

**3.** Procédé selon la revendication 2, dans lequel
dans le cas où N=6, les N symboles sont les six premiers symboles dans l'unité de temps de transmission.

**4.** Procédé selon la revendication 1, dans lequel M est égal à 2;
dans lequel le procédé comprend en outre au moins l'un des éléments suivants :

les positions dans le domaine fréquentiel sont situées de part et d'autre d'une largeur de bande du système;
la taille de ressource dans le domaine fréquentiel correspondant à chaque position dans le domaine fréquentiel est un bloc de ressources physiques (PRB); et
la taille de ressource dans le domaine fréquentiel correspondant à chaque position dans le domaine fréquentiel est un multiple de 12 sous-porteuses.

**5.** Procédé selon la revendication 4, dans lequel, dans le cas où la taille de ressource dans le domaine fréquentiel correspondant à chaque position dans le domaine fréquentiel est un PRB, un indice du PRB est déterminé par au moins l'un des éléments suivants :

un nombre total de PRB compris dans la largeur de bande du système;
un indice de ressource de canal attribué à l'extrémité de transmission ; et
un nombre de sous-porteuses comprises dans l'unique PRB.

**6.** Procédé selon la revendication 1, comprenant au moins l'un parmi:

K=2 ou K=3 ; et
un nombre de symboles dans chaque groupe est de un, deux, trois ou quatre.

**7.** Procédé selon la revendication 6, dans lequel, dans le cas où K=2, le procédé comprend au moins l'un parmi:

dans le cas où N=7, dans le motif de domaine temporel prédéfini, les symboles compris dans un groupe des deux groupes sont les quatre premiers symboles, et les symboles compris dans un autre groupe des deux groupes sont les trois derniers symboles; ou les symboles compris dans un groupe des deux groupes sont les trois premiers symboles et les symboles compris dans un autre groupe des deux groupes sont les quatre derniers symboles; ou

dans le cas où N=6, les symboles compris dans un groupe des deux groupes sont des symboles ayant des indices de symbole de 0, 1 et 2, les symboles compris dans un autre groupe des deux groupes sont des symboles ayant des indices de symbole de 3, 4 et 5; ou les symboles compris dans un groupe des deux groupes sont des symboles ayant des indices de symbole de 0, 1, 2 et 3, et les symboles compris dans un autre groupe des deux groupes sont des symboles ayant des indices de symbole de 4 et 5.

8. Procédé selon la revendication 7, dans lequel le procédé comprend en outre l'un parmi:

dans le cas où les symboles compris dans un premier groupe des deux groupes sont les quatre premiers symboles, et les symboles compris dans un second groupe des deux groupes sont les trois derniers symboles, un symbole de référence dans le premier groupe est situé sur un deuxième symbole et un troisième symbole dans le premier groupe, ou le symbole de référence dans le premier groupe est situé sur le deuxième symbole ; un symbole de référence dans le second groupe est situé sur un deuxième symbole dans le second groupe, ou le symbole de référence dans le second groupe est situé sur un premier symbole dans le second groupe; dans le cas où les symboles compris dans le premier groupe des deux groupes sont les trois premiers symboles, et les symboles compris dans le second groupe des deux groupes sont les quatre derniers symboles, le symbole de référence dans le premier groupe est situé sur un deuxième symbole dans le premier groupe, ou le symbole de référence dans le premier groupe est situé sur un premier symbole dans le premier groupe; le symbole de référence dans le second groupe est situé sur un deuxième symbole et un troisième symbole dans le second groupe, ou le symbole de référence du second groupe est situé sur le deuxième symbole et un quatrième symbole dans le second groupe, ou le symbole de référence dans le second groupe est situé sur le deuxième symbole dans le second groupe, ou le symbole de référence dans le second groupe est situé sur un premier symbole et un troisième symbole dans le second groupe; dans le cas où les symboles compris dans un groupe des deux groupes sont les symboles ayant les indices de symbole de 0, 1 et 2, et les symboles compris dans un autre groupe des deux groupes sont les symboles ayant les indices de symbole de 3, 4 et 5, le symbole de référence dans le premier groupe est situé sur un deuxième symbole dans le premier groupe, ou le symbole de référence dans le premier groupe est situé sur un premier symbole dans le premier groupe; le symbole de référence dans le second groupe est situé sur un deuxième symbole dans le second groupe, ou le symbole de référence dans le second groupe est situé sur un premier symbole dans le second groupe; et dans le cas où les symboles compris dans un groupe des deux groupes sont les symboles ayant les indices de symbole de 0, 1, 2 et 3, et les symboles compris dans un autre groupe des deux groupes sont les symboles ayant les indices de symbole de 4 et 5, le symbole de référence dans le premier groupe est situé sur un deuxième symbole et un troisième symbole dans le premier groupe, ou le symbole de référence dans le premier groupe est situé sur le deuxième symbole dans le premier groupe; le symbole de référence dans le second groupe est situé sur un deuxième symbole dans le second groupe, ou le symbole de référence dans le second groupe est situé sur un premier symbole dans le second groupe.

9. Procédé selon la revendication 1, dans lequel, dans le cas où K=2, le procédé comprend l'un parmi:

dans le cas où un intervalle de temps de transmission est situé dans un créneau 0 dans une sous-trame, un nombre de symboles compris dans un premier groupe est de trois et un nombre de symboles compris dans un second groupe est de quatre; et dans le cas où l'intervalle de temps de transmission est situé dans un créneau 1 dans la sous-trame, un nombre de symboles compris dans le premier groupe est de quatre et un nombre de symboles compris dans le second groupe est de trois; ou le nombre de symboles compris dans le premier groupe est de quatre et le nombre de symboles compris dans le second groupe est de deux.

10. Procédé selon la revendication 1, dans lequel, dans le cas où K=2 et où les informations envoyées sont des informations de commande de liaison montante de X bits, le procédé comprend l'un parmi:

un symbole de référence est situé sur un symbole ayant un indice de 1 et un symbole ayant un indice de 4 dans un intervalle de temps de transmission; le symbole de référence est situé sur le symbole ayant l'indice de 1 et un symbole ayant un indice de 5 dans l'intervalle de temps de transmission;

le symbole de référence est situé sur un symbole ayant un indice de 0 et un symbole ayant un indice de 3 dans l'intervalle de temps de transmission;

dans le cas où l'intervalle de temps de transmission est situé dans un créneau O dans une sous-trame, le symbole de référence est situé sur un symbole ayant un indice de 0 et un symbole ayant un indice de 3 dans l'intervalle de temps de transmission;

dans le cas où l'intervalle de temps de transmission est situé dans un créneau 1 dans la sous-trame, le symbole de référence est situé sur un symbole ayant un indice de 0 et un symbole ayant un indice de 4 dans l'intervalle de temps de transmission;

dans lequel X est un nombre entier supérieur à 2, et un nombre d'indice dans l'intervalle de temps de transmission commence à 0.

11. Dispositif de transmission d'informations, appliqué à une extrémité de transmission, comprenant:

un module de transmission (122), qui est configuré pour transmettre des informations sur N symboles dans une unité de temps de transmission selon un modèle prédéfini;

Dans lequel le modèle prédéfini comprend un modèle de domaine fréquentiel prédéfini et un modèle de domaine temporel prédéfini, et le modèle de domaine fréquentiel prédéfini comprend M positions dans le domaine fréquentiel, M étant un nombre entier positif, et une taille de ressource dans le domaine fréquentiel correspondant à chacune des M positions dans le domaine fréquentiel est occupée par la transmission des informations dans l'unité de temps de transmission;

dans lequel le motif prédéfini dans le domaine temporel comprend K groupes dans lesquels les N symboles sont divisés, dans lequel les K groupes sont consécutifs dans le domaine temporel et les positions dans le domaine fréquentiel de deux groupes adjacents quelconques dans les K groupes sont différentes, N est un nombre entier positif et N est supérieur à 1, et K est un nombre entier positif et K est supérieur à 1; et

dans lequel l'unité de temps de transmission comprend sept symboles, et le dispositif étant **caractérisé en ce qu'**un nombre de positions dans le domaine fréquentiel M correspondant aux K groupes est inférieur ou égal à K.

12. Dispositif selon la revendication 11, dans lequel N=7 ou 6.

13. Dispositif selon la revendication 11, dans lequel M est égal à 2 ; et

dans lequel le dispositif comprend en outre au moins l'un des éléments suivants:

les positions dans le domaine fréquentiel sont situées de part et d'autre d'une largeur de bande du système;

la taille de ressource dans le domaine fréquentiel correspondant à chaque position dans le domaine fréquentiel est un bloc de ressources physiques (PRB); et

la taille de ressource dans le domaine fréquentiel correspondant à chaque position dans le domaine fréquentiel est un multiple de 12 sous-porteuses.

14. Dispositif selon la revendication 13, dans lequel, dans le cas où la taille de ressource dans le domaine fréquentiel correspondant à chaque position dans le domaine fréquentiel est un PRB, un indice du PRB est déterminé par au moins l'un des éléments suivants:

un nombre total de PRB compris dans la largeur de bande du système;

un indice de ressource de canal attribué à l'extrémité de transmission; et

un nombre de sous-porteuses comprises dans l'unique PRB.

15. Dispositif selon la revendication 11, comprenant au moins l'un parmi:

K=2 ou K=3; et

un nombre de symboles dans chaque groupe est de un, deux, trois ou quatre.

Mobile terminal 10

```
┌─────────────────────────────────────────────────────────────┐
│                                                               │
│   ┌─────────────────────┐      ┌─────────────────────────┐   │
│   │                     │      │  Transmission device    │   │
│   │   Processor 102     │◄────►│  106                    │   │
│   │                     │      │                         │   │
│   └─────────────────────┘      └─────────────────────────┘   │
│             ▲                                                  │
│             │                                                  │
│             ▼                                                  │
│   ┌─────────────────────┐                                     │
│   │                     │                                     │
│   │    Memory 104       │                                     │
│   │                     │                                     │
│   └─────────────────────┘                                     │
│                                                               │
└─────────────────────────────────────────────────────────────┘
```

FIG.1

a transmitting end transmits information on N symbols in a transmission time unit according to a preset pattern, the preset pattern includes a preset frequency domain pattern and a preset time domain pattern, the preset frequency domain pattern includes a frequency domain position and a frequency domain resource magnitude occupied by transmitting the information in the transmission time unit, the preset time domain pattern includes K groups into which the N symbols are divided, where frequency domain patterns in adjacent groups are different, N is a positive integer and K is a positive integer ⟋ S202

FIG.2

FIG.3

FIG.4

FIG.5

FIG.6

FIG.7

FIG.8

FIG.9

FIG.10

FIG.11

FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SPREADTRUM COMMUNICATIONS.** Discussion on DL RS design for sTTI. *3GPP DRAFT (R1-1608915*